**Europäisches Patentamt**

**European Patent Office**

**Office européen des brevets**

(19)

(11)  **EP 1 004 361 A2**

(12)  ## EUROPEAN PATENT APPLICATION

(43)  Date of publication:
**31.05.2000   Bulletin 2000/22**

(51)  Int Cl.⁷: **B05C 5/02**, B05C 11/10

(21)  Application number: **99309122.2**

(22)  Date of filing: **16.11.1999**

(84)  Designated Contracting States:
**AT BE CH CY DE DK ES FI FR GB GR IE IT LI LU MC NL PT SE**
Designated Extension States:
**AL LT LV MK RO SI**

(30)  Priority: **27.11.1998   GB 9825880**

(71)  Applicant: **Rover Group Limited**
**Warwick CV34 6RG (GB)**

(72)  Inventors:
  • **Pitchford, Neil John The Old Forge**
    **Warwick CV34 4JD (GB)**

  • **Young, Kenneth William Hallaton**
    **Birmingham (GB)**
  • **Bull, Roger William Eric**
    **Coventry CV3 6NA (GB)**

(74)  Representative: **Farrow, Robert Michael et al**
    **Rover Group Limited**
    **Patent Department**
    **Gaydon Test Centre**
    **Banbury Road**
    **Lighthorne, Warwick CV35 ORG (GB)**

(54)  ## Adhesive dispensing method

(57)     A volume of adhesive is accurately dispensed to fill a joint 43 defined as a gap 46 between two panels 42, 44. The back pressure generated at an injection head 22 when injecting adhesive at a progressively increasing rate has been found to be a characteristic of the size of the joint gap. The back pressure can thus be used to calculate the joint gap and hence the volume of adhesive required to fill the joint to a required degree. The measurement of pressure and the calculation of the required volume of adhesive can be repeated at intervals during the dispensing to allow for non-uniform gaps.

Fig. 1

## Description

The present invention relates to a method of accurately dispensing a volume of adhesive to fill a joint to a desired degree. The present invention has particular utility in the automotive industry for the joining of panels or other members, such as hydroforms, extrusions or roll sections.

Due to ever more stringent requirements for improved emissions and fuel economy, there is a trend towards an increased use of lightweight materials such as aluminium in the construction of motor vehicles. It is known to join aluminium panels by the sole use of adhesive. However, at present the dispensing of such adhesive is usually performed manually and is only economic in the production of motor vehicles in relatively low volumes.

Adhesive can be applied separately to the joint faces of panels which may then be brought together to join the panels together. However, in such cases there is a danger that wiping or smearing of the adhesive may result resulting in a joint of insufficient integrity or a poor appearance.

It is also known to provide channels between joint faces such as spaceframe members into which adhesive may be injected. However, there remains a problem in that it is difficult to use a pre-programmed adhesive dispenser at a number of joints. Different joints require different amounts of adhesive and even a slight relative displacement of panels to be joined will have a disproportionate affect in the size of the gap between joint faces which leads to either underfilling or overfilling of the joint. Underfilling may result in a joint of insufficient stiffness or integrity, while overfilling may result in overflow of adhesive which is not only wasteful but is also unsightly in appearance. Smearing of the adhesive overflow or unwanted dripping of the adhesive may also occur.

It is an object of the present invention to provide an adhesive dispensing method which reduces or eliminates the above problems.

According to one aspect of the invention, a method of accurately dispensing a volume of adhesive from a dispensing nozzle to fill to a desired degree a joint comprising a gap between joint faces, the method comprising the steps of:

> i) establishing a relationship between the joint gap, filling time and a back pressure at the dispensing nozzle;
> ii) injecting adhesive into the joint at a predetermined rate while measuring a back pressure at the dispensing nozzle;
> iii) determining a time interval for the back pressure to pass between a first value and a second value;
> iv) using the time interval to obtain a joint gap value;
> v) using the joint gap value to calculate the volume of adhesive required to fill the joint to a desired degree;
> vi) determining the volume of adhesive already dispensed;
> vii) calculating the difference value between the volume of adhesive required to be dispensed and the volume already dispensed; and
> viii) continuing to dispense adhesive until the difference value of the volume of adhesive has been dispensed.

Since the size of the joint gap can be established, and from this the size of the joint estimated, only sufficient adhesive for the task in question will be dispensed. In this way both underfilling and overfilling of the joint gap can be substantially reduced or eliminated.

Conveniently, steps iii) to vii) occur during step ii).

The joint gap value obtained from the time interval during step iv) may be obtained by calculation, e. g. according to the polynomial function $a_n t^n + a_{n-1} t^{n-1} + ........ + a_1 t + a_0$ where t = time from start of injection and $a_n$, $a_{n-1}$, .......$a_1$, $a_0$ are constants.. Additionally or alternatively, during step iv) the time interval may be used to obtain the joint gap value by the use of a matrix.

It has been found that the joint gap can be better distinguished if, during step ii), the rate of injection of adhesive is increased progressively, preferably, by straight line ramping

The method may be further refined if, during step viii), the method further comprises the steps of:

> ix) measuring the back pressure at the dispensing nozzle after a predetermined time to obtain a back pressure value;
> x) comparing the back pressure value with an estimated value to provide a revised joint gap value;
> xi) using the revised joint gap value to recalculate the volume of adhesive required to fill the joint to the desired degree;
> xii) re-determining the volume of adhesive already dispensed;
> xiii) recalculating the difference value between the volume of adhesive required to be dispensed and the volume already dispensed; and
> xiv) repeating steps ix) to xiii) as often as is desired until step viii) is completed.

The invention also provides, according to a second aspect thereof, apparatus for accurately dispensing a volume of adhesive to fill to a desired degree a joint comprising a gap between joint faces when operated according to a method according to said one aspect of the invention.

The invention will now be described, by way of example only, with reference to the accompanying drawings, in which,

> Fig.1 is a diagrammatic cross-section of an injection apparatus suitable for use with the method of the present invention;

Fig.2 is a graph of flow rate against injection duration during use of the apparatus shown in Fig.1;

Fig.3 is a graph of back pressure against injection duration during use of the apparatus shown in Fig. 1 for joints of varying thickness;

Fig.4 is a diagrammatic cross-section of a first alternative configuration of joint;

Fig.5 is a diagrammatic cross-section of a second alternative configuration of joint;

Fig.6 is a diagrammatic cross-section of a third alternative configuration of joint; and

Fig.7 is a graph of back pressure against injection duration during use of the apparatus shown in Fig. 1 for joints of varying thickness and configuration.

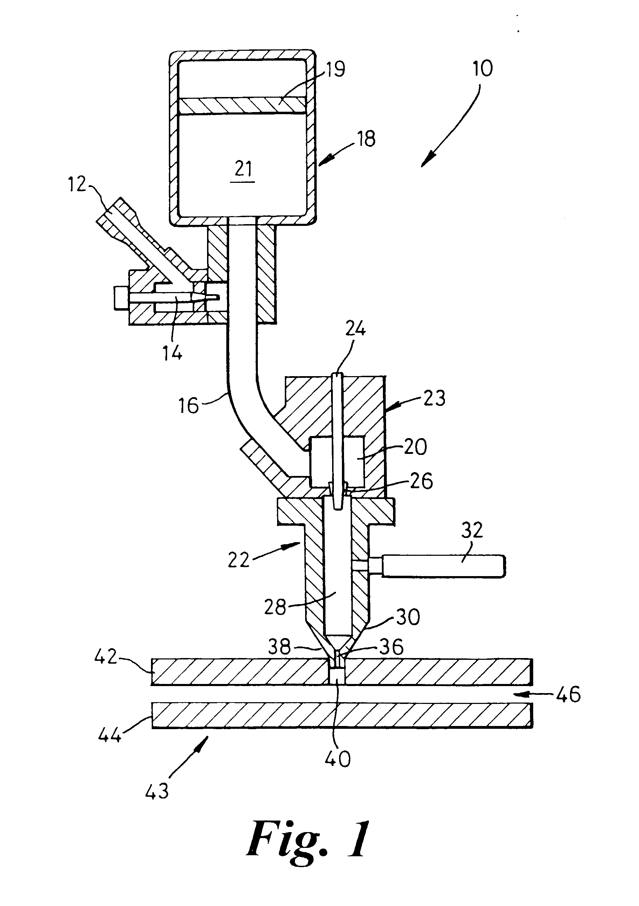

Referring first to Fig.1, in an injection apparatus 10 for use in the method of the invention, adhesive is supplied though a supply passage 12 by way of a feed valve 14 to a feed pipe 16. A doser 18 is arranged at one end of the feed pipe 16 and a feed chamber 20 of an injection head 22 is arranged at the other end. The injection head 22 includes an injection valve 23 comprising a valve pin 24 which controls flow of adhesive from the feed chamber 20 through an outlet orifice 26 into an inlet chamber 28 of an injection nozzle 30. A pressure sensor 32 is located in the injection nozzle 30 to detect the back pressure of adhesive within the injection nozzle inlet chamber 28. Adhesive can be dispensed from the injection nozzle 30 through an outlet passage 36 of reduced diameter which extends through an externally tapered nose 38 on the injection head 22.

In use, the tapered nose 38 of the injection head 22 is located against an aperture 40 in a first panel 42 forming a joint 43 where it overlaps a second panel 44, the overlapping joint faces of the panels being spaced to define a joint gap 46. The aperture 40 may be machined or formed in any other convenient manner, e.g. by punching.

To inject adhesive into the joint 43, the doser piston 19 is withdrawn by an actuator (not shown) with the feed valve 14 open to draw adhesive into the doser chamber 21 and the feed valve is then closed. The injection valve 23 is then opened and the doser piston 19 moved by its actuator to expel adhesive from the doser chamber 21, through the feed pipe 16 and through the injection nozzle 30 and into the aperture 40.

It has been found that when adhesive is injected into the joint 43 at a predetermined rate, the back pressure detected by the pressure sensor 32 is characteristic of the size of the joint gap 46. This characteristic is better defined, i.e. the gap size determined, if the rate of adhesive injection is increased progressively, i.e. ramped linearly. In practice, straight line ramping, such as would be provided by a constant linear acceleration of the doser piston 19, gives satisfactory results. However, other injection rates may be found to give equal or better results, perhaps depending on the viscosity and density of the adhesive.

The relationship between back pressure and joint gap size allows a correlation to be made between the size of the joint gap and the change in back pressure developed during injection through a particular nozzle, all for a particular adhesive injected though an aperture 40 of given size at a set injection rate . Thus for a given change in the back pressure, a reliable estimate of the size of the joint gap 46 can be calculated. By determining the size of the joint gap 46 in this way, it is possible to calculate the volume of adhesive required to fill the joint, or at least that portion of the joint that it is desired to fill. The volume of adhesive already injected to determine the joint gap 46 can be readily determined and subtracted from the volume required to fill the joint to the required degree to obtain a difference value. Injection of adhesive can be continued until a volume of adhesive equal to the difference value has been dispensed.

In a practical trial using the apparatus described above with reference to Fig.1, the injection of adhesive was automated using a six-axis Kuka (RTM) 125 robot to manipulate and support a SCA AK 3100 adhesive injection gun, modified to remove restrictive sized adhesive feed bores between the doser and the injection head to enable faster flow rates to be achieved. The back pressure was measured using a PICOLOG (RTM) data logger system and the adhesive was PPG 3289 Y 5000. The joints 43 were formed using equal sized plates of 150 mm square and 10 mm thick to represent the panels 42, 44. The aperture 40 in the first plate 42 was 6.2 mm diameter and centrally located. Four bolts were used to constrain the size the joint gap 46 which was set using shims of varying thickness to provide gaps between 0.35 mm and 3.2 mm.

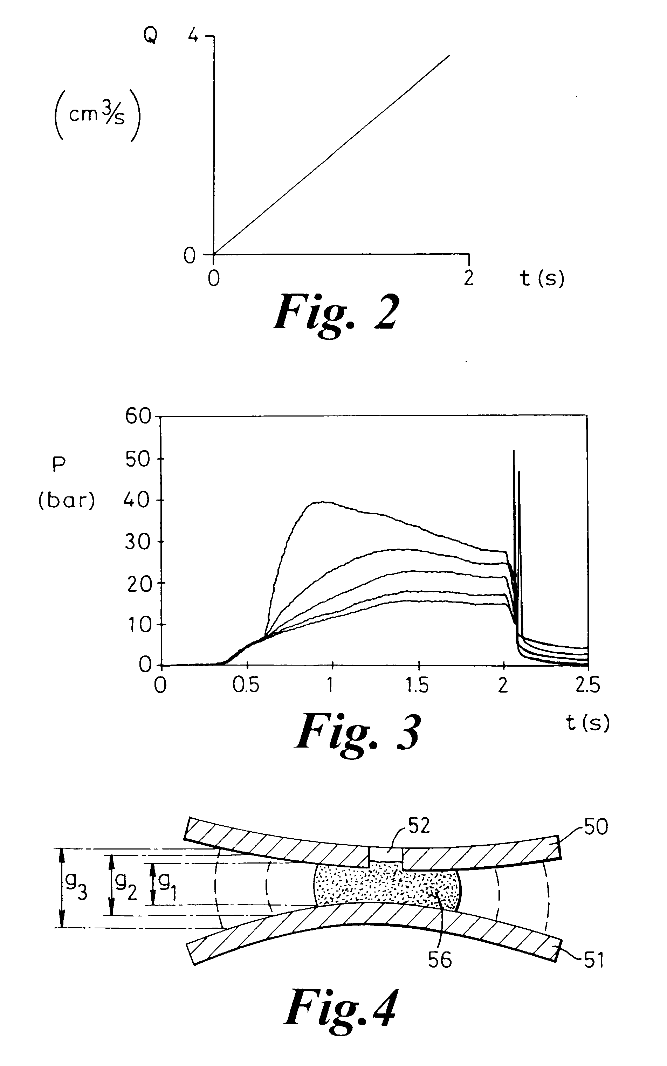

As illustrated in Fig.2 as a graph of injection rate Q against time t, the rate of flow of adhesive was ramped from 0 to 4 $cm^3$/sec. for the duration of the injection, i.e. 2 seconds. Fig.3 shows the back pressure P (in bars) taken during a series of injections of the adhesive into joints of different joint gap size over the same injection period, the smaller joint gap size being associated with the higher back pressures and vice-versa. The pressure spike at the end of each injection was due to the injection valve 23 closing, the valve needle 24 displacing adhesive in the nozzle chamber 28, momentarily increasing the back pressure. The portion of each back pressure curve which most clearly characterised the joint gap was found to be the time taken for the back pressure to rise from 5 and 15 bar.

For thirteen different joint gap sizes, a measurement was taken of the time required for the injection back pressure to rise from 5 to 15 bar. Using a proprietary mathematical software, MathCAD (RTM), an algorithm was generated to determine the joint gap size from the time taken for the back pressure to rise from 5 to 15 bar. The algorithm was based on the polynomial function:-

$$a_n t^n + a_{n-1} t^{n-1} + ........ + a_1 t + a_0$$

Where $a_n$, $a_{n-1}$, $a_1$, $a_0$ are constants.

For small variations in joint gap, a first degree polynomial (i.e. a straight line) has been found to give sufficient accuracy. However for the range of gaps tested, (0.35 to 3.2 mm as previously stated), a fourth degree polynomial was found to give the required degree of accuracy. This gave a joint gap according to the formula:-

$$\text{joint gap } (g) = A + Bt + Ct^2 + Dt^3 + Et^4$$

where A, B, C, D, E are constants which vary depending upon the adhesive, the ramp rate and the size of aperture through which the adhesive is injected and t is the time taken for the back pressure to change from 5 to 15 bar. The algorithm can be used either to calculate the joint gap directly or to generate a matrix in the form of a look-up table to eliminate the need to calculate the joint gap each time that the adhesive is injected. Alternatively, such a matrix can be established solely on the basis of experimental data.

Since the joint gap can be determined by the back pressure generated for a particular rate of injection, the particular adhesive, a particular nozzle and the aperture size, the volume of the joint, or at least that portion of the joint that it is desired to fill, can be calculated. The volume of adhesive already injected to determine the joint gap can be readily determined and subtracted from the volume required to fill the joint to the required degree to obtain a difference value. Injection of adhesive can be continued until a volume of adhesive equivalent to the difference value has been dispensed.

The trials were conducted using plates of steel and plates of Perspex (RTM) to investigate the effect of joint stiffness. The effect of joint stiffness was found to be negligible. The trials were also repeated using the same gap size to confirm the repeatability of the method and were found to produce results within satisfactory limits of experimental error.

It will be understood that joints need not, and often do not, comprise oppositely disposed parallel joint faces but may, for example, take the form of joints such as those shown in Figs.4 to 6. To allow for such variations in the joints, a further refinement of the method has also been developed.

In the first alternative configuration of joint shown in Fig.4, the joint is formed between two panels 50, 54, each of which is slightly curved. The first panel 50, which has an aperture 52, is bowed towards a central part where the aperture is located and the second panel 54 is bowed towards the aperture. Adhesive 56 has been injected into the joint but the joint spacing increases the further the radial distance from the aperture 52, as illustrated by the gap dimensions $g_1$, $g_2$, $g_3$.

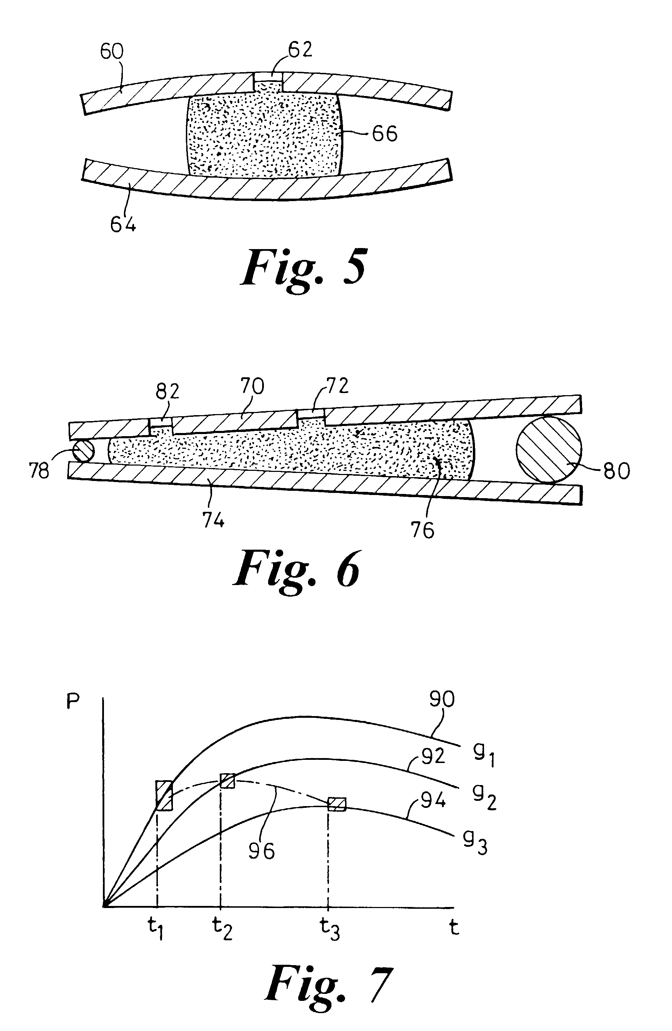

Fig.5 also shows a joint formed between two slightly curved panels 60, 64. In this case the first panel 60 is bowed away from a central part where the aperture 62 is located and the second panel 64 is bowed away from the aperture 62, the joint spacing decreasing the further the radial distance from the aperture 62.

In Fig.6 a first panel 70 has a aperture 72 through which the adhesive is injected into the joint with a second panel 74, the panels being separated from one another by spacers 78, 80 of different sizes so that they are at an angle to each other. The first panel 70 has a further aperture 82 which can serve two purposes. Firstly, it can act as a breather hole to allow the escape of air displaced from the joint by the adhesive and, secondly, it can act as an inspection port to provide visual confirmation of the extent of the spread of the adhesive within the joint. The adhesive will tend not to flow out of the further aperture 82 until the joint is substantially full of adhesive.

Using Fig.4 as an example, it will be understood that following initial injection of adhesive a joint gap value can be calculated. However, while this value will be sufficiently accurate to judge the joint gap in the region of injection, it will become increasingly inaccurate as adhesive expands radially away from the aperture 52. Indeed, in the example of Fig.4, if the initial joint gap $g_1$ is assumed to continue across the whole joint, the volume of adhesive required to fill the joint will be underestimated, resulting in compromised integrity of the joint. Conversely, in the example of Fig.5, if the initial joint gap is assumed to continue across the whole joint, there will be an overestimate of the volume of adhesive required, resulting in overfilling of the joint. In such a case, the excess adhesive will be forced out of the joint or through the breather hole 82 resulting in an unsightly joint appearance.

To overcome the above problems regarding joint variations, the back pressure is measured on a number of occasions during the injection of the adhesive. Referring to Fig.7, three curves 90, 92, 94 of back pressure P plotted against time t are shown in bold. These correspond to three joint gaps $g_1$, $g_2$, $g_3$ of constant spacing. A back pressure curve 96 is also shown in ghost corresponding to a back pressure against time plot for the joint gap of varying spacing shown in Fig.4.

Referring now to Figs.4 and 7 together, where, at time $t_1$, the adhesive has spread out to a diameter corresponding to the gap $g_1$, the calculated joint gap value corresponds to a joint having a constant joint gap of $g_1$ (curve 90). The method now generates a value for the volume of adhesive required to fill a joint of this spacing and deduces a difference value between the volume of adhesive already dispensed and the volume of adhesive required to fill the joint. In the absence of further calculations, the injection apparatus 10 will dispense a volume of adhesive based on this difference value.

Following the ghosted curve 96, it can be seen that the back pressure at time $t_2$ is less than that which would be generated by filling a joint of constant spacing $g_1$ but instead is closer to that generated by filling a joint of constant spacing $g_2$ (curve 92). By further calculation according to the established formula $g = A + Bt + Ct^2 + Dt^3 + Et^4$ or by further reference to the matrix or look-up table, a revised estimate of the joint gap, $g_2$, can be established. Accordingly, it is possible to recalculate the volume of the joint on the basis of the revised joint gap value and then to recalculated the difference value of the adhesive which corresponds to remaining volume of the joint to be filled. The same measurements and modifications can be performed at time $t_3$ and as often as desired until the joint is filled to the required degree. In this way, a joint of unknown, irregular shape can be filled to a required degree on the basis of results obtained from measurements of back pressure from a series of known uniformly spaced joints.

**Claims**

1.  A method of accurately dispensing a volume of adhesive from a dispensing nozzle to fill to a desired degree a joint comprising a gap between joint faces, the method comprising the steps of:

    i) establishing a relationship between the joint gap, filling time and a back pressure at the dispensing nozzle;
    ii) injecting adhesive into the joint at a predetermined rate while measuring a back pressure at the dispensing nozzle;
    iii) determining a time interval for the back pressure to pass between a first value and a second value;
    iv) using the time interval to obtain a joint gap value;
    v) using the joint gap value to calculate the volume of adhesive required to fill the joint to a desired degree;
    vi) determining the volume of adhesive already dispensed;
    vii) calculating the difference value between the volume of adhesive required to be dispensed and the volume already dispensed; and
    viii) continuing to dispense adhesive until the difference value of the volume of adhesive has been dispensed.

2.  A method according to claim 1 wherein steps iii) to vii) occur during step ii).

3.  A method according to claim 1 or claim 2 wherein during step iv) the time interval is used to obtain the joint gap value by calculation.

4.  A method according to claim 3 wherein the joint gap (g) is calculated according to the polynomial func-

tion $a_n t^n + a_{n-1} t^{n-1} + ........ + a_1 t + a_0$ where $t$ = time from start of injection and $a_n$, $a_{n-1}$, .......$a_1$, $a_0$ are constants.

5.  A method according to any preceding claim wherein during step iv) the time interval is used to obtain the joint gap value by the use of a matrix.

6.  A method according to any preceding claim wherein during step ii) the rate of injection of adhesive is increased progressively.

7.  A method according to any preceding claim wherein during step ii) the rate of injection of adhesive is increased progressively by straight line ramping

8.  A method according to any preceding claim wherein during step viii) the method further comprises the steps of:

    ix) measuring the back pressure at the dispensing nozzle after a predetermined time to obtain a back pressure value;
    x) comparing the back pressure value with an estimated value to provide a revised joint gap value;
    xi) using the revised joint gap value to recalculate the volume of adhesive required to fill the joint to the desired degree;
    xii) re-determining the volume of adhesive already dispensed;
    xiii) recalculating the difference value between the volume of adhesive required to be dispensed and the volume already dispensed; and
    xiv) repeating steps ix) to xiii) as often as is desired until step viii) is completed.

9.  A method of accurately dispensing a volume of adhesive to fill a joint to a desired degree substantially as described herein with reference to the accompanying drawings.

10. Apparatus for accurately dispensing a volume of adhesive to fill to a desired degree a joint comprising a gap between joint faces when operated according to a method as claimed in any preceding claim.

**Fig. 1**

Fig. 2

Fig. 3

Fig.4

60

62

66

## Fig. 5

82    70    72

78    74    76    80

## Fig. 6

P

90

92

g₁

g₂

94

96

g₃

t₁    t₂    t₃    t

## Fig. 7